# EUROPEAN PATENT SPECIFICATION

(11) **EP 3 210 424 B1**
(45) Date of publication and mention of the grant of the patent: **19.08.2020**
(21) Application number: 14805382.0
(22) Date of filing: 11.11.2014
(51) Int. Cl.: H04L 5/00, H04W 36/00, H04W 36/08

(54) **HANDLING HANDOVER OF AN UE IN CASE CELL SPECIFIC REFERENCE SIGNALS INTERFER WITH A PHYSICAL DOWNLINK CONTROL CHANNEL**
HANDHABUNG DER WEITERGABE EINES BENUTZERGERÄTS IM FALL VON INTERFERENZ VON ZELLENSPEZIFISCHEN REFERENZSIGNALEN MIT EINEM PHYSIKALISCHEN DOWNLINK-STEUERKANAL
GESTION DE TRANSFERT D'UE LORSQUE DES SIGNAUX DE RÉFÉRENCE SPÉCIFIQUES D'UNE CELLULE INTERFÈRENT AVEC UN CANAL PHYSIQUE DE COMMANDE DE LIAISON DESCENDANTE

(30) Priority: 21.10.2014 US 201462066391 P
(43) Date of publication of application: 30.08.2017
(73) Proprietor: Telefonaktiebolaget LM Ericsson (publ), 164 83 Stockholm (SE)
(72) Inventor: JONSSON, Mikael, 162 53 Vällingby (SE); BUDIC, Miroslav, Murphy, Texas 75094 (US); HEDLUND, Leo, 125 33 Älvsjö (SE); MANN, Karl, Ottawa, Ontario K2J 3C4 (CA); MÜLLER, Walter, 194 62 Upplands Väsby (SE)
(74) Representative: Zacco Sweden AB
(86) International application number: PCT/SE2014/051337
(87) International publication number: WO 2016/064319

(56) References cited:
- EP-A1- 2 446 570
- EP-A2- 2 733 875
- US-A1- 2012 207 126
- US-A1- 2013 028 199

## Description

### TECHNICAL FIELD

Embodiments herein relate to a network node and a method therein. In particular, they relate to a method for handling handover of a User Equipment (UE) from a first cell to a second cell.

### BACKGROUND

Communication devices such as UEs are enabled to communicate wirelessly in a cellular communications network or wireless communication system, sometimes also referred to as a cellular radio system or cellular networks. The communication may be performed e.g. between two UEs, between a UE and a regular telephone and/or between a UE and a server via a Radio Access Network (RAN) and possibly one or more core networks, comprised within the cellular communications network.

UEs may further be referred to as wireless terminals, mobile terminals and/or mobile stations, mobile telephones, cellular telephones, laptops, tablet computers or surf plates with wireless capability, just to mention some further examples. The UEs in the present context may be, for example, portable, pocket-storable, hand-held, computer-comprised, or vehicle-mounted mobile devices, enabled to communicate voice and/or data, via the RAN, with another entity, such as another wireless terminal or a server.

The cellular communications network covers a geographical area which is divided into cell areas, wherein each cell area is being served by a network node. A cell is the geographical area where radio coverage is provided by the network node.

The network node may further control several transmission points, e.g. having Radio Units (RRUs). A cell can thus comprise one or more network nodes each controlling one or more transmission/reception points. A transmission point, also referred to as a transmission/reception point, is an entity that transmits and/or receives radio signals. The entity has a position in space, e.g. an antenna. A network node is an entity that controls one or more transmission points. The network node may e.g. be a base station such as a Radio Base Station (RBS), eNB, eNodeB, NodeB, B node, or BTS (Base Transceiver Station), depending on the technology and terminology used. The network nodes may be of different classes such as e.g. macro eNodeB, home eNodeB or pico base station, based on transmission power and thereby also cell size.

Further, each network node may support one or several communication technologies. The network nodes communicate over the air interface operating on radio frequencies with the UEs within range of the network node. In the context of this disclosure, the expression Downlink (DL) is used for the transmission path from the base station to the mobile station. The expression Uplink (UL) is used for the transmission path in the opposite direction i.e. from the UE to the base station.

Long Term Evolution (LTE) is a radio access technology standardized by the 3rd Generation Partnership Project (3GPP). In LTE, network nodes, which may be referred to as eNodeBs or even eNBs, may be directly connected to one or more core networks. In LTE the cellular communication network is also referred to as E-UTRAN. The standard is based on Orthogonal Frequency-Division Multiplexing (OFDM) in the downlink and Single Carrier - Frequency Division Multiple Access (SC-FDMA) in the uplink.

An E-UTRAN cell is defined by certain signals which are broadcasted from the network node. These signals contain information about the cell which can be used by UEs in order to connect to the network through the cell. The signals comprise reference and synchronization signals which the UE uses to find frame timing and physical cell identification as well as system information which comprises parameters relevant for the whole cell.

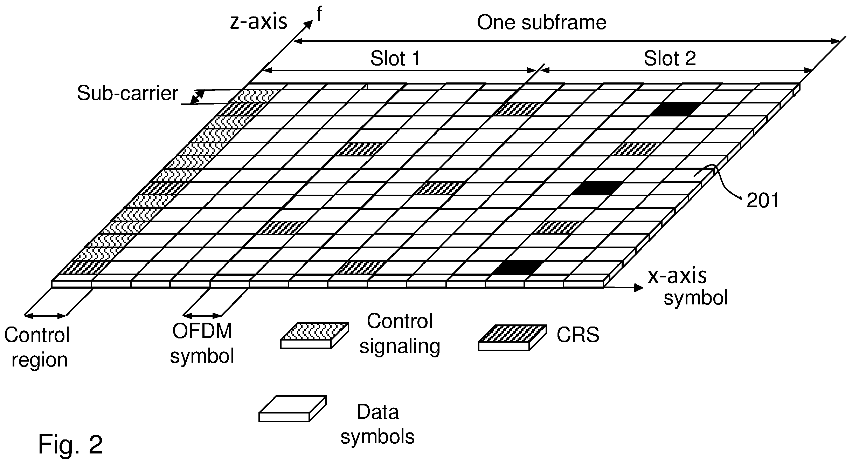

In the time domain in the downlink, one subframe is divided into a number of OFDM symbols. One OFDM symbol further comprises a number of sub-carriers in the frequency domain. One OFDM symbol on one sub-carrier is referred to as a Resource Element (RE), shown as squares in Figure 2 below.

In LTE, no dedicated data channels are used, instead shared channel resources are used in both DL and UL. These shared resources, are each controlled by a scheduler that assigns different parts of the DL and UL shared channels to different UEs for reception and transmission respectively.

The assignment information for where to find the payload data on the shared channels are transmitted in a control region covering a few OFDM symbols in the beginning of each downlink subframe. The data is transmitted in a data region covering the rest of the OFDM symbols in each downlink subframe. The size of the control region is either, one, two, three or four OFDM symbols and is set per subframe. The size is signaled as a specific Control Format Indicator (CFI) to the UE for each subframe on the so called Physical Control Format Indicator Channel (PCFICH). In order to allow data in form of voice services as well as data services to be sent over LTE, high data transfer rates are necessary. This is achieved by keeping the size of the control region to a minimum at all times, thereby maximizing the size of the data region.

Each assignment, i.e. a pointer to the set of REs where the payload data is actually sent, is transmitted on a physical channel named Physical Downlink Control Channel (PDCCH) in the control region. There are typically multiple PDCCHs in each subframe and the UEs will be required to monitor the PDCCHs to be able to detect the assignments directed to them and in that way being able to find the data directed to them.

The PDCCH is mapped to a number of Control Channel Elements (CCEs). A PDCCH comprises an aggregation of 1, 2, 4 or 8 CCEs. These four different alternatives are herein referred to as aggregation level 1, 2, 4, and 8 respectively. The variable size achieved by the different aggregation levels is used to adapt the coding rate to the required Block Error Rate (BLER) level for each PDCCH. The total number of available CCEs in a subframe will vary depending on, among other things, the number of OFDM symbols used for control. The CCEs which make up a PDCCH, will be spread in time and frequency in a pseudo random manner within the control region. A few of the REs within the control region will however be used for Cell specific Reference Signals (CRS). These REs will not be used by CCEs, at least not within the same cell.

The CRS are UE known symbols that are inserted in a RE of a subframe of an OFDM time and frequency grid and broadcasted by the network node. Each RE has an extension in the frequency domain corresponding to an OFDM sub carrier and an extension in the time-domain corresponding to an OFDM symbol interval.

The CRS are used by the UE for downlink channel estimation. Channel estimation is used for demodulation of downlink data both when the UE is in connected state and is receiving user data, and when the UE is in idle state and is reading system information. Due to the latter use case, the CRS must be transmitted even from cells which do not have any UEs connected.

In case several antennas are used by the network node for transmitting and each antenna is representing a cell, each antenna has to transmit a unique CRS in order for the UE to connect to that specific cell. When one antenna transmits, the other antennas have to be silent in order not to interfere with the first antennas CRS. To reduce the interference of reference signals between the cells, the position in the grid of the CRS is usually shifted in frequency between the cells by applying a frequency offset between the CRS sent in the different cells on a site.

The main advantages using such configuration are low interference on CRS and low level of contamination of channel quality estimates. On the other hand, shifted CRS will introduce increased interference on channels used for signaling as well as data in neighboring cells. Although this solution reduces the interference of CRS between cells, it has the problem that the CRS of one cell will disturb Physical Downlink Shared Channel (PDSCH) and Physical Downlink Control Channel (PDCCH) symbols of neighboring cells.

This has shown to affect handover performance negatively in a significant way, since the assignment to the Handover Command via the PDCCH is affected by the interference from the shifted CRS in neighboring cells. The reduction of handover performance often leads to loss of service for the affected UE. This is especially a problem when voice services are provided, since a dropped call due to loss of service is more obvious and annoying to a user than a loss in data transfer while e.g. surfing the internet.

EP2446570 discloses a method in a network node for improving a transmission of a control message, comprising e.g. scheduling information (DCI), to a UE. The control message is mapped to a plurality of Control Channel Element (CCE) groups, and is transmitted to the UE over the plurality of control channel element groups within a single TTI on a radio channel.

EP2733875 discloses providing an enhanced PDCCH when not all of the control information can be transmitted in a control region of a downlink subframe. That is, if the control region is insufficient. Additional resources may be assigned to send control information by configuring an enhanced PDCCH (E-PDCCH) region.

US2012207126 discloses the use of E-PDCCH in networks applying shifted CRS.

US 20130028199A1 appears to describe a method for providing enhanced inter-cell interference coordination in a mobile network such that information concerning PCFICH can be effectively obtained by the UE in interfering situations.

### SUMMARY

It is therefore an object of embodiments herein to improve handover for a UE in a wireless communications network. The invention is defined by the embodiments of the invention. Furthermore, the embodiments of the invention are those defined by the claims. Moreover, examples and embodiments, which are not covered by the claims are presented not as embodiments of the invention, but as background art or examples useful for understanding the invention.

According to a first aspect of embodiments herein, the object is achieved by a method performed by a network node, for handling handover of a user equipment, UE. The network node serves a first cell comprising one or more UEs. When a Signaling Radio Bearer, SRB, is determined to be scheduled for a UE in handover from the first cell to a second cell, the network node increases the number of Orthogonal Frequency Division Multiplexing, OFDM, symbols included in a control region of a downlink OFDM-subframe sent in the first cell. The subframe is sent in a Transmission Time Interval, TTI, related to the handover.

According to a second aspect of embodiments herein, the object is achieved by a network node for performing the method for handling handover of a user equipment, UE. The network node is configured to serve a first cell comprising one or more UEs. The network node is further configured to increase the number of OFDM-symbols included in a control region of a downlink OFDM-subframe sent in in the first cell in a Transmission Time Interval, TTI, related to the handover, when a Signaling Radio Bearer, SRB, is determined to be scheduled for a UE in handover in the cell.

Contrary to previous teachings, it has been shown that the method described herein drastically increases the quality of the connection. The method has shown to be especially beneficial for data demanding services, such as Voice over LTE (VoLTE). By increasing the number of OFDM-symbols included in the control region of the OFDM-subframe a robust PDCCH is created at the expense of data transfer during handover. However, since the number of OFDM-symbols is increased dynamically, i.e. only when a UE is in handover and an SRB is determined to be scheduled for the UE, the higher robustness is achieved at a minimum cost in terms of resources, i.e. with minimal impact on peak data rates. This will increase the retainability, i.e. reduce the number of unsuccessful handovers and lost service whilst maintaining a high spectral efficiency.

A further advantage with embodiments herein is that the planning and/or engineering of the network nodes is simplified, since the number of OFDM-symbols can be set dynamically according to current demands, instead of having to be statically set for each network node.

### BRIEF DESCRIPTION OF THE DRAWINGS

Examples of embodiments herein are described in more detail with reference to attached drawings in which:
- Figure 1: is a schematic block diagram illustrating embodiments of a wireless communications network.
- Figure 2: is a schematic block diagram illustrating embodiments of an OFDM subframe.
- Figure 3: is a flowchart depicting embodiments of a method in a network node.
- Figure 4: is a schematic block diagram illustrating embodiments of a network node.

### DETAILED DESCRIPTION

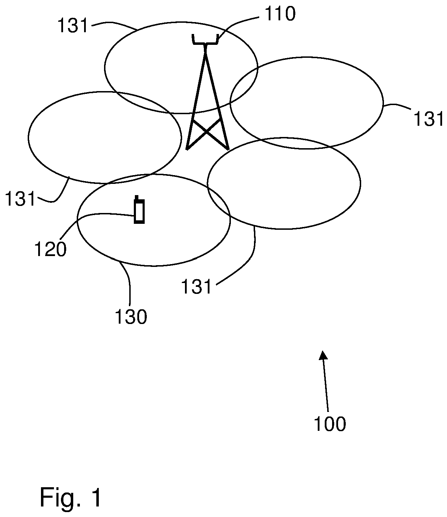

**Figure 1** depicts an example of a **wireless communications network 100** according to a first scenario in which embodiments herein may be implemented. The wireless communications network100 is a wireless communication network such as an LTE, E-Utran, any 3GPP cellular network, Wimax, or any cellular network or system applying OFDM-signaling.

The wireless communications network 100 comprises a plurality of network nodes whereof one **network node 110** is depicted in Figure 1. The network node 110 may be a transmission point such as a radio base station, for example an eNB, an eNodeB, or an Home Node B, an Home eNode B or any other network node capable to serve a wireless terminal such as UE or a machine type communication device in a wireless communications network. The network node 110 serves a plurality of cells, such as a **first cell 130** and one or more **second cells 131.**

A **UE 120** operates in the wireless communications network 100. The network node 110 may be a transmission point for the UE 120. The UE 120 is within radio range of the first cell 130 and the one or more second cells 131, this means that it can hear signals from the first cell 130 and the one or more second cells 131. The UE 120 is camping on the first cell 130.

The UE 120 may e.g. be a wireless terminal, a wireless device, a mobile wireless terminal or a wireless terminal, a mobile phone, a computer such as e.g. a laptop, a Personal Digital Assistant (PDA) or a tablet computer, sometimes referred to as a surf plate, with wireless capability, or any other radio network units capable to communicate over a radio link in a wireless communications network. Please note the term wireless terminal used in this document also covers other wireless devices such as Machine to Machine (M2M) devices.

**Figure 2** shows an exemplary downlink OFDM time and frequency grid related to embodiments herein, which is also referred to as an OFDM subframe. Each subframe comprises two slots. Each slot comprises a number of **REs 201** extending both in the time domain (x-axis) and in the frequency domain (z-axis). Each RE's 201 extension in the frequency domain is referred to as a sub-carrier whereas the extension in the time domain is referred to as an OFDM symbol. As can be seen in figure 2, the first OFDM symbol comprises control signaling, such as PDCCH, and CRS which carries the necessary information about the network node 110 to allow the UE 120 to connect to it. The control signaling is located in the beginning of each subframe, also known as the control region of the subframe, and spans the full bandwidth of the subframe. Figure 2 shows an exemplary size of a common control region of one OFDM symbol, the size of the control region may however be dynamically adjusted according to the current traffic situation.

The CRS are used by the UE 120 for downlink channel estimation. Channel estimation is used for determining the demodulation of downlink data both when the UE 120 is in RRC connected state and is receiving user data and when the UE 120 is in RRC idle state and is reading system information. Downlink CRS are inserted within the first and third last OFDM symbol of each slot with a frequency domain spacing of six sub-carriers.

The subframe also comprises data symbols used for transmitting user data between the network node 110 and the UE 120. The data symbols are situated in the region following the control region, which is also referred to as the data region. Hence reducing the number of OFDM-symbols when no UE 120 is in handover increases the available data symbols in the OFDM-subframe, which ensures a high throughput and spectral efficiency.

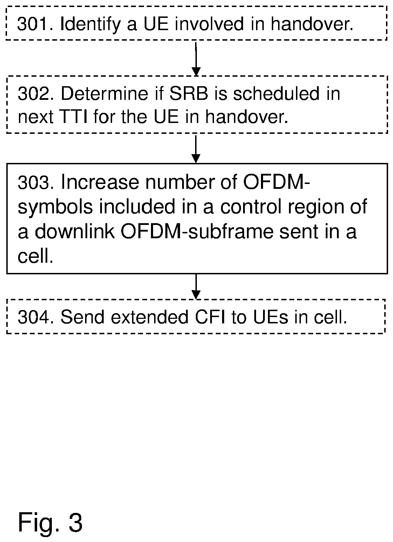

Example of embodiments of a method performed by the network node 110 for handling handover of a UE, will now be described with reference to a flowchart depicted in **Figure 3****.**

### Action 301

In some embodiments herein, the network node 110 identifies the UE 120 involved in a handover from the first cell 130 to the second cell 131. This may be identified by the network node 110 receiving a measurement of signal strength of the first cell 130 and the second cell 131 from the UE 120. If a measurement report from the UE 120 shows that the signal strenght of the second cell 131 is better than the signal strength of the first cell 130 that the UE 120 is camping on, a handover may be triggered for UE 120. This may also be referred to as the UE 120 being in handover.

### Action 302

When a UE 120 involved in handover has been identified, the network node 110 may further determine if a Signaling Radio Bearer (SRB) is to be scheduled in the next Transmission Time Interval (TTI) for the UE 120 involved in handover. The SRB carries Downlink Control Channel (DCCH) signaling data and is used during connection establishment to send signaling to the UE 120 to start the desired connection, i.e. the SRB may serve as a trigger for performing handover.

In a further embodiment herein, Deep Packet Inspection (DPI) may be used to determine if an SRB is actually sent in a following TTI.

### Action 303

When an SRB is determined to be scheduled for the UE 120 in the handover from the first cell 130 to a second cell 131, the network node 110 increases the number of OFDM-symbols included in a control region of a downlink OFDM-subframe sent in the first cell 130. The OFDM-subframes with an increased number of OFDM-symbols may be sent in a TTI related to the handover, i.e. in one or more TTIs directly before, during or directly after the TTI were the handover related signaling is expected to be sent. In a preferred embodiment however, the number of OFDM-symbols is only increased in TTIs where handover related signaling is expected to be sent. In a further advantageous embodiment herein, the number of OFDM-symbols is only increased in TTIs where handover related signaling is actually known to be sent.

Measurements on live networks have shown, that interference from CRS in one cell on PDCCH of another cell is particularly a problem when the control region only consists of one OFDM-symbol. It has been shown that unsuccessful handovers is one of the main reasons for lost calls when voice services are provided over LTE. Although an increased number of OFDM-symbols in the control region of the subframe reduces the available REs for data transfer, the quality of the connection is drastically increased. By increasing the number of OFDM-symbols of the control region during a handover procedure, the PDCCH is spread in time into symbols not polluted by CRS symbols from neighboring cells. Thereby the number of unsuccessful handovers and lost service can effectively be reduced. To minimize the interference from shifted CRS in neighboring cells experienced by the UE 120 and increase the robustness of the PDCCH according to embodiments herein, the network node 110 may increase the number of OFDM-symbols in the control region to a number higher than 1.

Advantagegously, the number of increased OFDM-symbols is an integer number and may be in the range of 2 to 4 OFDM-symbols. However, the number of increased OFDM-symbols depends on the number of OFDM-symbols previously used for PDCCH, i.e. if the PDCCH previously comprised one OFDM-symbol then the increased number of OFDM-symbols may comprise two OFDM-symbols, if the previous number of symbols was two then the increased number may be three etc.

The OFDM-symbols are increased dynamically, i.e. the number of OFDM-symbols is increased only during handover. If there is no UE 120 in handover or if there is no SRB scheduled for the UE 120 in handover the network node 110 reduces the number of OFDM-symbols in the control region to a minimum.

### Action 304

In some embodiments herein, the network node 110 may further send an extended CFI to the UEs 120 located in the cell. The CFI indicates the increased number of OFDM-symbols included in the control region of the OFDM-subframe. This information tells the UE 120 where in the subframe to find the control information. The extended CFI is sent to all UEs 120 located in the first cell 130, since the control region of the OFDM-subframe is read by all UEs 120 in order to find their respective control information. The CFI may be signaled in the cell 130 on a PCFICH physical channel.

In some embodiments herein, the network node 110 serves multiple cells which may apply shifted CRS. In an advantageous embodiment herein, the method described above is performed in the cells 130 where shifted CRS is applied.

The method actions described above may be performed for each cell and TTI of the network node.

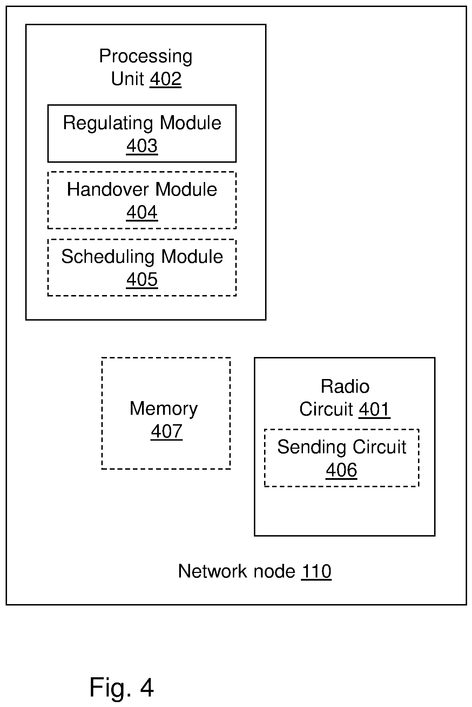

To perform the method actions for improving handover described above in relation to Figure 3, the network node 110 comprises the following arrangement depicted in **Figure 4****.** As mentioned above the network node 110 is configured to serve at least a first cell 130 comprising one or more UEs 120.

The network node 110 comprises a **radio circuitry 401** to communicate with UEs 120 and a **processing unit 402.**

The network node 110 is configured to, e.g. by means of a **regulating module 403** being configured to, increase the number of OFDM-symbols included in a control region of a downlink OFDM-subframe sent in the first cell 130 in a Transmission Time Interval, TTI, related to the handover, when a Signaling Radio Bearer, SRB, is determined to be scheduled for a UE 120 in handover from the first cell 130 to a second cell 131. The regulating module 403 may be comprised in the processing unit 402. In a further embodiment the network node may be configured to, e.g. by means of the regulating module 403 being configured to, increase the number of OFDM-symbols in the control region to an integer higher than 1. In further embodiments herein the network node may be configured to, e.g. by means of the regulating module 403 being configured to, increase the number of OFDM-symbols to an integer in the range of 2 to 4

In some embodiments herein, the network node 110 may be configured to, e.g. by means of a **handover module 404** being configured to, identify a first UE 120 that is involved in a handover from a first cell 130 to a second cell 131. The handover module 404 may be comprised in the processing unit 402.

The network node 110 may further be configured to, or comprises a **scheduling module 405** configured to, determine if a Signaling Radio Bearer (SRB) is to be scheduled for the UE 120, when the UE 120 has been identified to be involved in a handover from a first cell 130 to a second cell 131. The scheduling module 405 may be comprised in the processing unit 402.

In some embodiments herein, the network node 110 may further be configured to, e.g. by means of a **sending circuitry 406** being configured to, send an extended control format indicator (CFI) to the UEs 120 located in the cell 130. The CFI indicates the number of OFDM-symbols included in the control region of the OFDM-subframe. Accordingly, the extended control format indicator indicates the increased number of OFDM-symbols. This information tells the UE 120 where in the subframe to find the control information. The network node may send the extended CFI to all UEs 120 located in the first cell 130, since the control region of the OFDM-subframe is read by all UEs 120 in order to find their respective control information. The network node 110 may signal the extended CFI in the cell 130 using the PCFICH channel. The sending circuit 406 may be comprised in the radio circuitry 401.

The embodiments herein for handling a handover of a user equipment (UE) from a first cell to a second cell may be implemented through one or more processors, such as the processing unit 402 in the network node 110 depicted in Figure 4, together with computer program code for performing the functions and actions of the embodiments herein. The program code mentioned above may also be provided as a computer program product, for instance in the form of a data carrier carrying computer program code for performing the embodiments herein when being loaded into the in the network node 110. One such carrier may be in the form of a CD ROM disc. It is however feasible with other data carriers such as a memory stick. The computer program code may furthermore be provided as pure program code on a server and downloaded to the network node 110.

The network node 110 may further comprise a **memory 407** comprising one or more memory units. The memory 407 is arranged to be used to store obtained information, measurements, data, configurations, schedulings, and applications to perform the methods herein when being executed in the network node 110.

Those skilled in the art will also appreciate that the regulating module 403, the handover module 404 and the scheduling module 405 described above may refer to a combination of analog and digital circuits, and/or one or more processors configured with software and/or firmware, e.g. stored in the memory 407, that when executed by the one or more processors such as the processing unit 402 as described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

When using the word "comprise" or "comprising" it shall be interpreted as nonlimiting, i.e. meaning "consist at least of".

The embodiments herein are not limited to the above described preferred embodiments. Various alternatives, modifications and equivalents may be used. Therefore, the above embodiments should not be taken as limiting the scope of the invention, which is defined by the appending claims.

## Claims

1. A method performed by a network node (110), for handling handover of a user equipment, UE (120), wherein the network node (110) serves a first cell (130) and a second cell (131) and the method is performed in cells (130) where shifted Cell Reference Signals, CRS, is applied, the method comprising:
*determining* (302) whether a Signaling Radio Bearer, SRB, is to be scheduled in a next Transmission Time Interval, TTI, for the UE 120 involved in the handover,
when a SRB is determined to be scheduled in the next TTI for the UE (120) in handover from the first cell (130) to the second cell (131), *dynamically increasing* (303) a number of Orthogonal Frequency Division Multiplexing symbols, OFDM-symbols, during a next TTI related to handover, wherein the OFDM-symbols are included in a control region of a downlink OFDM subframe sent in the first cell (130), and wherein the downlink OFDM subframe with the increased number of OFDM-symbols is only sent in the next TTI related to the handover, and
*sending* (304), to UEs (120) located in the cell (130), an extended control format indicator, indicating the number of OFDM-symbols included in the control region of the downlink OFDM subframe.

2. The method according to claim 1, wherein the number of increased OFDM-symbols is higher than 1.

3. The method according to any of the claims 1-2, wherein the number of increased OFDM-symbols is an integer number in the range of 2 to 4.

4. The method according to any of the claims 2-3, wherein the extended control format indicator is sent to all UEs (120) located in the first cell (130).

5. A network node (110) for performing the method for handling handover of a user equipment, UE, (120) wherein the network node (110) serves a first cell (130) and a second cell (131) and the method is performed in cells (130) where shifted Cell Reference Signals, CRS, is applied, the network node (110) further being configured to:
*determining* (302) whether a Signaling Radio Bearer, SRB, is to be scheduled in a next Transmission Time Interval, TTI, for the UE 120 involved in handover,
when a SRB is determined to be scheduled for the UE (120) in handover from the first cell (130) to the second cell (131),
*dynamically* increase a number of Orthogonal Frequency Division Multiplexing symbols, OFDM-symbols, during a next TTI related to handover, wherein the OFDM symbols are included in a control region of a downlink OFDM-subframe sent in the first cell (130), and wherein the donwlink OFDM subframe with the increased number of OFDM symbols is only sent in the next TTI related to the handover, and
send, to the UEs (120) located in the cell, an extended control format indicator, indicating the increased number of OFDM-symbols included in the control region of the downlink OFDM-subframe.

6. The network node (110) according to claim 5, wherein the number of increased OFDM-symbols is an integer higher than 1.

7. The network node (110) according to any of the claims 5-6, wherein the number of increased OFDM-symbols is an integer in the range of 2 to 4.

8. The network node (110) according to any of the claims 5-7, wherein the network node (110) further is configured to:
send the extended control format indicator to all UEs (120) located in the cell (130).

## Patentansprüche

1. Verfahren, das durch einen Netzknoten (110) durchgeführt wird, zur Handhabung der Weitergabe einer Benutzereinrichtung, UE (120), wobei der Netzknoten (110) eine erste Zelle (130) und eine zweite Zelle (131) bedient und das Verfahren in Zellen (130) durchgeführt wird, wo verschobene Zellreferenzsignale, CRS, angelegt wird, das Verfahren umfassend:
*Bestimmen* (302), ob ein Signalisierungsfunkträger, SRB, in einem nächsten Übertragungszeitintervall, TTI, für die UE 120, die an der Weitergabe beteiligt ist, geplant werden soll,
wenn bestimmt wird, dass ein SRB in dem nächsten TTI für die UE (120) bei einer Weitergabe von der ersten Zelle (130) an die zweite Zelle (131) geplant ist,
*dynamisches Erhöhen* (303) einer Anzahl von Symbolen eines orthogonalen Frequenzmultiplexverfahrens, OFDM-Symbolen, während einer nächsten TTI, die auf die Weitergabe bezogen ist, wobei die OFDM-Symbole in einer Steuerregion eines Downlink-OFDM-Unterrahmens, der in der ersten Zelle (130) gesendet wird, enthalten sind, und wobei der Downlink-OFDM-Unterrahmen mit der erhöhten Anzahl von OFDM-Symbolen erst in der nächsten TTI, die auf die Weitergabe bezogen ist, gesendet wird, und
*Senden* (304), an UEs (120), die sich in der Zelle (130) befinden, eines erweiterten Steuerformatindikators, der die Anzahl von OFDM-Symbolen, die in der Steuerregion des Downlink-OFDM-Unterrahmens enthalten sind, angibt.

2. Verfahren nach Anspruch 1, wobei die Anzahl von erhöhten OFDM-Symbolen höher als 1 ist.

3. Verfahren nach einem der Ansprüche 1 bis 2, wobei die Anzahl von erhöhten OFDM-Symbolen eine Ganzzahl im Bereich von 2 bis 4 ist.

4. Verfahren nach einem der Ansprüche 2 bis 3, wobei der erweiterte Steuerformatindikator an alle UEs (120), die sich in der ersten Zelle (130) befinden, gesendet wird.

5. Netzknoten (110) zum Durchführen des Verfahrens zur Handhabung der Weitergabe einer Benutzereinrichtung, UE, (120), wobei der Netzknoten (110) eine erste Zelle (130) und eine zweite Zelle (131) bedient und das Verfahren in Zellen (130) durchgeführt wird, wo verschobene Zellreferenzsignale, CRS, angelegt wird, wobei der Netzknoten (110) ferner konfiguriert ist zum:
*Bestimmen* (302), ob ein Signalisierungsfunkträger, SRB, in einem nächsten Übertragungszeitintervall, TTI, für die UE 120, die an einer Weitergabe beteiligt ist, geplant werden soll,
wenn bestimmt wird, dass ein SRB für die UE (120) bei einer Weitergabe von der ersten Zelle (130) an die zweite Zelle (131) geplant ist,
*dynamisches* Erhöhen einer Anzahl von Symbolen eines orthogonalen Frequenzmultiplexverfahrens, OFDM-Symbolen, während einer nächsten TTI, die auf die Weitergabe bezogen ist, wobei die OFDM-Symbole in einer Steuerregion eines Downlink-OFDM-Unterrahmens, der in der ersten Zelle (130) gesendet wird, enthalten sind, und wobei der Downlink-OFDM-Unterrahmen mit der erhöhten Anzahl von OFDM-Symbolen erst in der nächsten TTI, die auf die Weitergabe bezogen ist, gesendet wird, und
Senden, an die UEs (120), die sich in der Zelle befinden, eines erweiterten Steuerformatindikators, der die erhöhte Anzahl von OFDM-Symbolen, die in der Steuerregion des Downlink-OFDM-Unterrahmens enthalten sind, angibt.

6. Netzknoten (110) nach Anspruch 5, wobei die Anzahl von erhöhten OFDM-Symbolen eine Ganzzahl höher als 1 ist.

7. Netzknoten (110) nach einem der Ansprüche 5 bis 6, wobei die Anzahl von erhöhten OFDM-Symbolen eine Ganzzahl im Bereich von 2 bis 4 ist.

8. Netzknoten (110) nach einem der Ansprüche 5 bis 7, wobei der Netzknoten (110) ferner konfiguriert ist zum:
Senden des erweiterten Steuerformatindikators an alle UEs (120), die sich in der Zelle (130) befinden.

## Revendications

1. Procédé mis en œuvre par un nœud de réseau (110), pour prendre en charge un transfert d'un équipement utilisateur, UE (120), dans lequel le nœud de réseau (110) dessert une première cellule (130) et une deuxième cellule (131) et le procédé est mis en œuvre dans des cellules (130) où des signaux de référence de cellule, CRS, décalés est appliqué, le procédé comprenant :
le *fait de déterminer* (302) si une porteuse radio de signalisation, SRB, doit être planifiée dans un intervalle de temps de transmission, TTI, suivant pour l'UE 120 impliqué dans le transfert,
lorsqu'une SRB est déterminée comme devant être planifiée dans le TTI suivant pour l'UE (120) dans le transfert depuis la première cellule (130) vers la deuxième cellule (131), l'*accroissement dynamique* (303) d'un nombre de symboles de multiplexage par répartition orthogonale de la fréquence, symboles OFDM, pendant un TTI suivant se rapportant au transfert, dans lequel les symboles OFDM sont inclus dans une région de commande d'une sous-trame OFDM de liaison descendante envoyée dans la première cellule (130), et dans lequel la sous-trame OFDM de liaison descendante avec le nombre accru de symboles OFDM est uniquement envoyée dans le TTI suivant se rapportant au transfert, et
l'*envoi* (304), à des UE (120) situés dans la cellule (130), d'un indicateur de format de commande étendu, indiquant le nombre de symboles OFDM inclus dans la région de commande de la sous-trame OFDM de liaison descendante.

2. Procédé selon la revendication 1, dans lequel le nombre de symboles OFDM accrus est supérieur à 1.

3. Procédé selon l'une quelconque des revendications 1 ou 2, dans lequel le nombre de symboles OFDM accrus est un nombre entier dans la plage de 2 à 4.

4. Procédé selon l'une quelconque des revendications 2 ou 3, dans lequel l'indicateur de format de commande étendu est envoyé à tous les UE (120) situés dans la première cellule (130).

5. Nœud de réseau (110) pour mettre en œuvre le procédé pour prendre en charge un transfert d'un équipement utilisateur, UE (120) dans lequel le nœud de réseau (110) dessert une première cellule (130) et une deuxième cellule (131) et le procédé est mis en œuvre dans des cellules (130) où des signaux de référence de cellule, CRS, décalés est appliqué, le nœud de réseau (110) étant en outre configuré pour :
*déterminer* (302) si une porteuse radio de signalisation, SRB, doit être planifiée dans un intervalle de temps de transmission, TTI, suivant pour l'UE 120 impliqué dans le transfert,
lorsqu'une SRB est déterminée comme devant être planifiée pour l'UE (120) dans le transfert depuis la première cellule (130) vers la deuxième cellule (131),
accroître *dynamiquement* un nombre de symboles de multiplexage par répartition orthogonale de la fréquence, symboles OFDM, pendant un TTI suivant se rapportant au transfert, dans lequel les symboles OFDM sont inclus dans une région de commande d'une sous-trame OFDM de liaison descendante envoyée dans la première cellule (130), et dans lequel la sous-trame OFDM de liaison descendante avec le nombre accru de symboles OFDM est uniquement envoyée dans le TTI suivant se rapportant au transfert, et
envoyer, aux UE (120) situés dans la cellule, un indicateur de format de commande étendu, indiquant le nombre accru de symboles OFDM inclus dans la région de commande de la sous-trame OFDM de liaison descendante.

6. Nœud de réseau (110) selon la revendication 5, dans lequel le nombre de symboles OFDM accrus est un nombre entier supérieur à 1.

7. Nœud de réseau (110) selon l'une quelconque des revendications 5 ou 6, dans lequel le nombre de symboles OFDM accrus est un nombre entier dans la plage de 2 à 4.

8. Nœud de réseau (110) selon l'une quelconque des revendications 5 à 7, dans lequel le nœud de réseau (110) est en outre configuré pour :
envoyer l'indicateur de format de commande étendu à tous les UE (120) situés dans la cellule (130).
